# EUROPÄISCHE PATENTANMELDUNG

(11) **EP 4 475 456 A1**
(43) Veröffentlichungstag der Anmeldung: **11.12.2024**
(21) Anmeldenummer: 23177624.6
(22) Anmeldetag: 06.06.2023
(51) Int. Cl.: H04B 10/114, G03B 37/00, H04B 10/80

(54) **SYSTEM ZUR DATENÜBERTRAGUNG ZWISCHEN KOMPONENTEN EINES KANALINSPEKTIONS- UND/ODER WARTUNGSSYSTEMS**

(71) Anmelder: iPEK International GmbH, 87477 Sulzberg (DE)
(72) Erfinder: Endler, Hannes, 87439 Kempten (DE)
(74) Vertreter: 2s-ip Schramm Schneider Bertagnoll Patent- und Rechtsanwälte Part mbB

(57) **Zusammenfassung**

Bereit gestellt wird ein System zur Datenübertragung zwischen einer ersten Komponente und einer zweiten Komponente eines Kanalinspektions- und/oder Wartungssystems, wobei Koppelelemente der Komponenten miteinander verbindbar sind, derart, dass bei miteinander verbundenen Koppelelementen von den beiden Koppelelementen umfasste Transceiver-Einrichtungen operativ koppelbar sind, und wobei die beiden Transceiver-Einrichtungen jeweils angepasst sind zwischen ihnen eine optische Datenübertragung abzuwickeln.

## Beschreibung

### Gebiet der Erfindung

Die Erfindung betrifft ein System zur Datenübertragung zwischen Komponenten eines Kanalinspektions- und/oder Wartungssystems, eine entsprechend angepasstes Koppelelement, sowie eine Komponente eines Kanalinspektions- und/oder Wartungssystems.

### Hintergrund der Erfindung

Im Bereich der Kanalinspektion und/oder Wartung werden Zusatzkomponenten wie Kameramodule oder andere Messmodule, die eine hohe Datenrate bzw. Bandbreit benötigen, meist lösbar mit der Vorschubeinheit (etwa ein Fahrwagen) verbunden.

Kameraeinheiten werden meist mit einer Rotations-Schwenk-Mechanik versehen. Um die Signale bzw. Daten der Kamera an die Vorschubeinheit zu übertragen, werden üblicherweise Schleifringe und Steckkontakte verwendet.

Kameramodule mit 1k-Sensoren liefern Roh-Datenraten von 1,5 bis 3 Gbibs. Bei einem 4k-Kameramodul vervierfachen sich die Datenraten auf 12 Gbit/s. Auch andere Sensoren wie hochauflösende Ultraschallscanner, LIDAR, etc. können hohe Bandbreiten für eine effiziente Datenübertragung benötigen.

Aufgrund der begrenzten Anzahl der Steckkontakte in herkömmlichen Lösungen werden vorzugsweise serielle Datenschnittstellen mit wenigen Datenleitungen verwendet. So ermöglichen etwa LVDS (Low Voltage Differential Signaling) via Serializer / Deserializer, CoaXPress, Cameralink, USB 3.0, Single-Pair Ethernet, GigE Vision, SDI, Datenraten von bis zu 10 Gbit/s.

Zum Teil werden aber auch konventionelle analoge Videoschnittstellen verwendet.

Die zuerst genannten digitalen Schnittstellen haben aufgrund der hohen Bandbreite erhöhte Anforderungen an die Steckverbinder oder Drehdurchführungen. Die Steckverbinder müssen dann meist Koaxial oder Twisted-Pair ausgeführt werden. Die robust ausgeführten Steckkontakte eignen sich nicht für hohe Datenraten. Um den Anforderungen an den Explosionsschutz gerecht zu werden sind z.B. Luft- und Kriechstrecken zwischen den Steckkontakten notwendig, welche sich aber negativ auf die Signalintegrität auswirken.

Ein weiterer aus dem Stand der Technik bekannter Lösungsansatz ist, dass die Datenrate vor der Übertragung über den einen Schleifring oder Steckkontakt bereits durch Komprimierungsverfahren reduziert wird. Für die Komprimierung von hochauflösenden Videos sind allerdings leistungsstarke Videoverarbeitungseinheiten notwendig, welche Platz benötigen und durch die Leistung ein Kühlkonzept benötigen. Der verfügbare Bauraum in den Zusatzkomponenten (Kamera etc.) ist in den meisten Fällen nicht ausreichend, um ein Prozessormodul, ein FPGA oder dergleichen zu integrieren.

Desweitern besteht die Möglichkeit, die Daten drahtlos via elektromagnetische Wellen zu übertragen. Hier wird die induktive Nahfeldkommunikation oder ein Funkstandard (WiFi) verwendet. Beide Übertragungsmöglichkeiten haben eine begrenzte Bandbreite.

### Aufgabe der Erfindung

Aufgabe der vorliegenden Erfindung ist es daher ein System zur Datenübertragung zwischen Komponenten eines Kanalinspektions- und/oder Wartungssystems bereitzustellen, das die genannten Nachteile zumindest teilweise vermeidet und dennoch robust ausgeführt werden kann und eine hohe Bandbreite für eine Datenübertragung zwischen den Komponenten gewährleistet.

### Erfindungsgemäße Lösung

Gelöst wird diese Aufgabe mit einem System, einem Koppelelement sowie einer Komponente nach den unabhängigen Ansprüchen. Vorteilhafte Ausgestaltungen sind in den jeweiligen abhängigen Ansprüchen angegeben.

Bereit gestellt wird demnach ein System zur Datenübertragung zwischen einer ersten Komponente und einer zweiten Komponente eines Kanalinspektions- und/oder Wartungssystems, wobei
- die erste Komponente
   - ein erstes Koppelelement und
   - eine erste Transceiver-Einrichtung
   aufweist, wobei das erste Koppelelement die erste Transceiver-Einrichtung umfasst,
- die zweite Komponente
   - ein zweites Koppelelement und
   - eine zweite Transceiver-Einrichtung

aufweist, wobei das zweite Koppelelement die zweite Transceiver-Einrichtung umfasst,
wobei die beiden Koppelelemente miteinander verbindbar sind, derart, dass bei miteinander verbundenen Koppelelementen die von den beiden Koppelelementen umfassten Transceiver-Einrichtungen operativ koppelbar sind, und
wobei die beiden Transceiver-Einrichtungen jeweils angepasst sind, zwischen ihnen eine optische Datenübertragung abzuwickeln.

Vorteilhaft ist es, wenn die beiden Transceiver-Einrichtungen jeweils angepasst sind, zwischen ihnen eine bidirektionale optische Datenübertragung abzuwickeln.

Weiter kann es vorteilhaft sein, wenn
- das erste Koppelelement eine erste elektrische Schnittstelle und
- das zweite Koppelelement eine zweite elektrische Schnittstelle
umfassen, die angepasst sind, bei miteinander verbundenen Koppelelementen eine Übertragung von elektrischer Energie und/oder Daten zwischen den beiden Komponenten abzuwickeln. Damit wird es möglich sowohl eine optische Datenübertragung als auch eine Übertragung von elektrischer Energie über eine einzige Verbindung abzuwickeln.

Vorteilhaft kann es ein, wenn die beiden elektrischen Schnittstellen angepasst sind die Übertragung von elektrischer Energie auf induktiver Basis abzuwickeln.

In einer Ausgestaltung der Erfindung können die beiden Koppelelemente relativ zueinander um eine gemeinsame Drehachse drehbar miteinander verbindbar sein.

Die Transceiver-Einrichtungen können jeweils eine Sende- und/oder Empfangsoptik aufweisen, die in der Drehachse des jeweiligen Koppelelements angeordnet sind. Dadurch können die Koppelemente relativ zueinander um die gemeinsame Drehachse gedreht werden, ohne dass die optische Datenübertragung beeinflusst wird.

Vorteilhaft kann es ein, wenn die beiden Koppelelemente derart ausgestaltet sind, dass sie im verbundenen Zustand für die Übertragungsstrecke der optischen Datenübertragung zwischen den beiden Transceiver-Einrichtungen ein weitgehend gas- und fluiddichtes Volumen zwischen den beiden Koppelelementen bilden.

Vorteilhaft kann es zudem sein, wenn die Komponenten jeweils gas- und fluiddicht ausgeführt sind, insbesondere jeweils in einem gas- und fluiddichten Gehäuse angeordnet sind.

In einer Ausgestaltung der Erfindung können die beiden Transceiver-Einrichtungen jeweils angepasst sein
- empfangene optische Lichtimpulse, die empfangene Daten repräsentieren, in ein die empfangenen Daten repräsentierendes elektrisches Signal, und/oder
- ein elektrisches Signal, das zu sendende Daten repräsentiert, in zu sendende optische Lichtimpulse, die die zu sendenden Daten repräsentieren,
umzuwandeln.

Vorteilhaft ist es, wenn die beiden Koppelelemente lösbar miteinander verbindbar sind.

Bereitgestellt wird ferner ein Koppelelement für eine Komponente eines Kanalinspektions- und/oder Wartungssystems, wobei das Koppelelement eine Transceiver-Einrichtung umfasst, wobei das Koppelelement mit einem weiteren, eine Transceiver-Einrichtung aufweisenden Koppelelement koppelbar ist, wobei die Transceiver-Einrichtung angepasst ist eine optische Datenübertragung zur Transceiver-Einrichtung des weiteren Koppelelements einzurichten.

Das Koppelelement kann eine elektrische Schnittstelle umfassen, die angepasst ist mit einer elektrischen Schnittstelle des weiteren Koppelelements eine Übertragung von elektrischer Energie und/oder Daten abzuwickeln.

Die Transceiver-Einrichtung kann eine Sende- und/oder Empfangsoptik aufweisen, wobei die Sende- und/oder Empfangsoptik vorzugsweise in einer Drehachse des Koppelelements angeordnet ist.

Bereitgestellt wird durch die Erfindung schließlich eine Komponente eines Kanalinspektions- und/oder Wartungssystems, aufweisend ein Koppelelement und eine Transceiver-Einrichtung, wobei das Koppelelement die Transceiver-Einrichtung umfasst, und wobei die Transceiver-Einrichtung angepasst ist eine optische Datenübertragung abzuwickeln.

Das Koppelelement kann eine elektrische Schnittstelle umfassen, wobei die elektrische Schnittstelle angepasst ist elektrische Energie und/oder Daten zu übertragen.

Die elektrische Schnittstelle kann angepasst sein die elektrische Energie auf induktiver Basis zu übertragen.

Die Transceiver-Einrichtung kann eine optische Schnittstelle umfassen, die angepasst ist Daten zu übertragen.

Die Komponente des Kanalinspektions- und/oder Wartungssystems kann beispielsweise ein Fahrwagen, eine Kamera, ein Manipulator, Sensorsysteme. Beispielsweise kann eine Kamera mittels des erfindungsgemäßen Systems mit dem Fahrwagen gekoppelt werden - die Datenübertragung kann dann auf optischer Basis abgewickelt werden.

### Kurzbeschreibung der Figuren

Weitere Einzelheiten und Merkmale der Erfindung sowie konkrete, insbesondere vorteilhafte Ausführungsbeispiele der Erfindung ergeben sich aus der nachfolgenden Beschreibung in Verbindung mit der Zeichnung. Es zeigt:
- Fig. 1: zwei erfindungsgemäße Komponenten eines Kanalinspektions- und/oder Wartungssystems;
- Fig. 2: eine Ausgestaltung erfindungsgemäßer Koppelelemente im Detail;
- Fig. 3: ein konkretes Anwendungsbeispiel der Erfindung anhand eines drehbaren und/oder schwenkbaren Kameramoduls eines Kanalinspektions- und/oder Wartungssystems;
- Fig. 4: eine alternative Ausgestaltung zweier erfindungsgemäßer Komponenten eines Kanalinspektions- und/oder Wartungssystems; und
- Fig. 5: eine weitere alternative Ausgestaltung zweier erfindungsgemäßer Komponenten eines Kanalinspektions- und/oder Wartungssystems.

### Detaillierte Beschreibung der Erfindung

Die Erfindung ermöglicht es in vorteilhafter Weise eine Datenübertragung zwischen zwei koppelbaren Komponenten eines Kanalinspektions- und/oder Wartungssystems mit hohen Bandbreiten sicher und effizient abzuwickeln. Erfindungsgemäß weisen die beiden Komponenten jeweils eine Transceiver-Einrichtung auf, die angepasst sind zwischen ihnen eine optische Datenübertragung abzuwickeln. Die Komponenten bzw. die Koppelelemente der Komponenten sind derart ausgestaltet, dass, wenn sie miteinander gekoppelt sind, hohe Datenraten bei kurzen Distanzen ermöglicht werden.

Der Austausch von Energie zwischen den Komponenten eines Kanalinspektions- und/oder Wartungssystems kann über herkömmliche Steckkontakte stattfinden. In einer Ausgestaltung der Erfindung ist es aber vorgesehen, die Übertragung von elektrischer Energie mittels induktiver Kopplung zu bewerkstelligen.

In einer Ausgestaltung der Erfindung kann es vorgesehen sein, die optischen Komponenten der Transceiver-Einrichtungen in der Drehachse der Koppelelemente bzw. der Komponenten anzuordnen. Dadurch kann die mechanische Kopplung der beiden Komponenten drehbar ausgeführt werden, ohne dass die optische Datenübertragung dadurch beeinflusst wird.

Bei nicht drehbarer mechanischer Kopplung, wie es in einer alternativen Ausgestaltung der Erfindung vorgesehen sein kann, können die Transceiver-Einrichtungen auch außerhalb der Drehachse der Koppelelemente bzw. der Komponenten platziert werden.

Aufgrund der optischen Datenübertragung über sehr kurze Strecken bei gekoppelten Komponenten sind sehr hohe Datenraten möglich. Gleichzeitig kann aufwendige Schleifringe oder dergleichen verzichtet werden, jedenfalls wenn die optischen Komponenten der Transceiver-Einrichtungen in der Drehachse der Koppelelemente bzw. der Komponenten angeordnet werden.

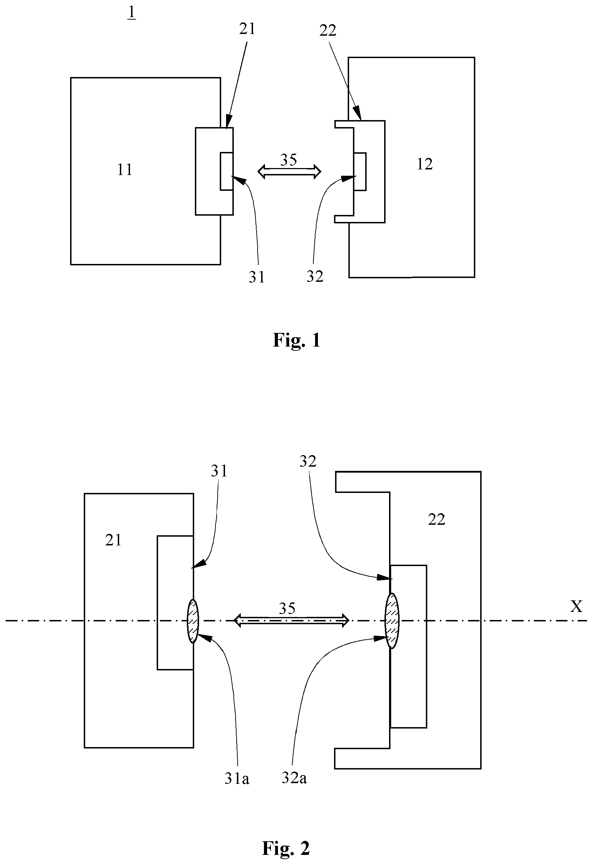

**Fig. 1** zeigt ein erfindungsgemäßes System 1 mit einer ersten Komponente 11 und einer zweiten Komponente 12. Bei den beiden Komponenten 11, 12 handelt es sich hier um Komponenten eines Kanalinspektions- und/oder Wartungssystems, die miteinander gekoppelt werden können und zwischen denen eine Datenübertragung abgewickelt werden soll.

Die erste Komponente 11 weist ein erstes Koppelelement 21 und eine erste Transceiver-Einrichtung 31 auf, wobei das erste Koppelelement 21 die erste Transceiver-Einrichtung 31 umfasst. Die zweite Komponente 12 weist ein zweites Koppelelement 22 und eine zweite Transceiver-Einrichtung 32 auf, wobei das zweite Koppelelement 22 die zweite Transceiver-Einrichtung 32 umfasst.

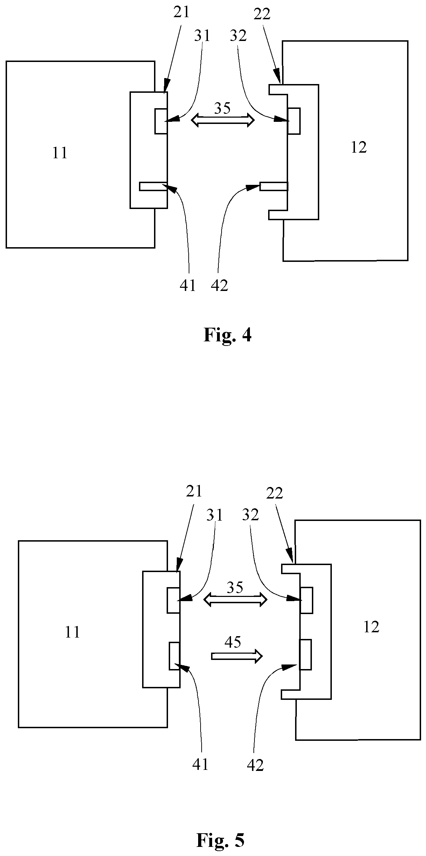

Die beiden Koppelelemente 21, 22 sind miteinander verbindbar. In einer Ausgestaltung der Erfindung können die beiden Koppelelemente 21, 22 auch lösbar miteinander verbindbar sein. Die beiden Koppelelemente 21, 22 sind in jedem Falls derart miteinander verbindbar, dass bei miteinander verbundenen Koppelelementen 21, 22 die von den beiden Koppelelementen 21, 22 umfassten Transceiver-Einrichtungen 31, 32 operativ koppelbar sind. "Operativ koppelbar" bedeutet in diesem Zusammenhang, dass, wenn die beiden Koppelelemente miteinander gekoppelt sind, die beiden Transceiver-Einrichtung im Sinne einer Datenübertragung koppelbar sind, d.h. gekoppelt werden können, um eine optische Datenübertragung zwischen ihnen abzuwickeln. Die optische Datenübertragung wird in Fig. 5 durch den Doppelpfeil 35 verdeutlicht. Es ist sowohl eine unidirektionale als auch eine bidirektionale optische Datenübertragung zwischen den beiden Transceiver-Einrichtungen 31, 32 möglich.

In einer Ausgestaltung der Erfindung sind die beiden Komponenten 11, 12 vorzugsweise jeweils in einem gas- und fluiddichten Gehäuse untergebracht.

In einer weiteren Ausgestaltung der Erfindung können die beiden Koppelelemente 21, 22 so ausgestaltet sein, dass, wenn sie miteinander gekoppelt sind, zwischen ihnen ein gas- und fluiddichtes Volumen bzw. ein gas- und fluiddichter Raum gebildet wird, wobei in diesem Volumen bzw. Raum die beiden Transceiver-Einrichtungen 31, 32 angeordnet sind. Dies kann etwa mit einer radial umlaufenden Dichtung realisiert werden. Dadurch wird vermieden, dass im Betrieb Schmutz zwischen die beiden Transceiver-Einrichtungen 31, 32 gelangt, der die optische Datenübertragung negativ beeinflussen könnte. In einer Ausgestaltung ist der Raum zwischen den beiden Transceiver-Einrichtungen 31, 32 lediglich vor eindringenden Schmutz geschützt, der die optische Datenübertragung negativ beeinflussen könnte.

Bei der ersten Komponente 11 kann es sich beispielsweise um ein Kameramodul handeln und bei der zweiten Komponente 12 kann es sich beispielsweise um einen Fahrwagen eines Kanalinspektionssystems handeln. Mittels der beiden Koppelemente 21, 22 kann das Kameramodul an den Fahrwagen angeschlossen werden, sodass eine Übertragung von Bild und/oder Videodaten über die beiden Transceiver-Einrichtungen 31, 32 abgewickelt werden können.

Zum Arretieren der ersten Komponente an der zweiten Komponente können entsprechende (hier nicht gezeigte) Arretiermittel vorgesehen sein. In einer vorteilhaften Ausgestaltung der Erfindung können die Arretiermittel derart ausgestaltet sein, dass sie zwar ein unbeabsichtigtes Lösen der ersten Komponente von der zweiten Komponente verhindern, aber dennoch ein Drehen der ersten Komponente um eine Drehachse relativ zur zweiten Komponente ermöglichen, wie etwa in Fig. 2 gezeigt.

Weist das Kameramodul etwa eine integrierte Energieversorgung auf (beispielsweise einen Akkumulator oder eine Batterie) kann auf eine externe Energieversorgung, etwa über den Fahrwagen bzw. über die beiden Koppelemente 21, 22 verzichtet werden. Erfindungsgemäße Ausgestaltungen der Erfindung, bei denen eine Energieversorgung über die beiden Koppelemente 21, 22 abgewickelt werden kann, sind in Fig. 4 und Fig. 5 gezeigt.

**Fig. 2** zeigt eine vergrößerte Ansicht der beiden in Fig. 1 gezeigten Koppelemente 21, 22. Bei den beiden in Fig. 2 gezeigten Koppelementen 21, 22 handelt es sich um vorteilhafte Ausgestaltungen derselben, die ein Drehen der Koppelemente relativ zueinander um eine Drehachse X erlauben, ohne dass hierbei die optische Datenübertragung beeinflusst wird. Die beiden Koppelelemente 21, 22 sind hier relativ zueinander um eine gemeinsame Drehachse X drehbar miteinander verbindbar.

Die beiden Transceiver-Einrichtungen 31, 32 weisen jeweils eine Sende- und/oder Empfangsoptik 31a, 32a auf (die auch bei den Ausgestaltungen gemäß der Figuren 1, 3, 4 und 5 vorhanden sind, dort aber nicht gezeigt sind), die in der gemeinsamen Drehachse X des jeweiligen Koppelelements 21, 22 angeordnet sind. Bei einem Drehen der Koppelementen 21, 22 um die Drehachse X ändert sich die relative Lage der beiden Sende- und/oder Empfangsoptiken 31a, 32a nicht, sodass eine optische Übertragung 35 unabhängig vom Drehwinkel gewährleistet ist.

Die Koppelemente 21, 22 sind so ausgestaltet, dass im gekoppelten Zustand ein vorbestimmter Abstand zwischen den beiden Sende- und/oder Empfangsoptik 31a, 32a erreicht wird, der an eine optimale optische Datenübertragung angepasst ist. Beispielsweise können hier nicht gezeigte umlaufende Vorsprünge im zweiten Koppelement 22 vorgesehen sein, die verhindern, dass beim Koppeln der beiden Koppelemente ein bestimmter Mindestabstand zwischen den beiden Sende- und/oder Empfangsoptiken 31a, 32a unterschritten wird. Das kann aber auch mit anderen hierfür geeigneten Mittel erreicht werden.

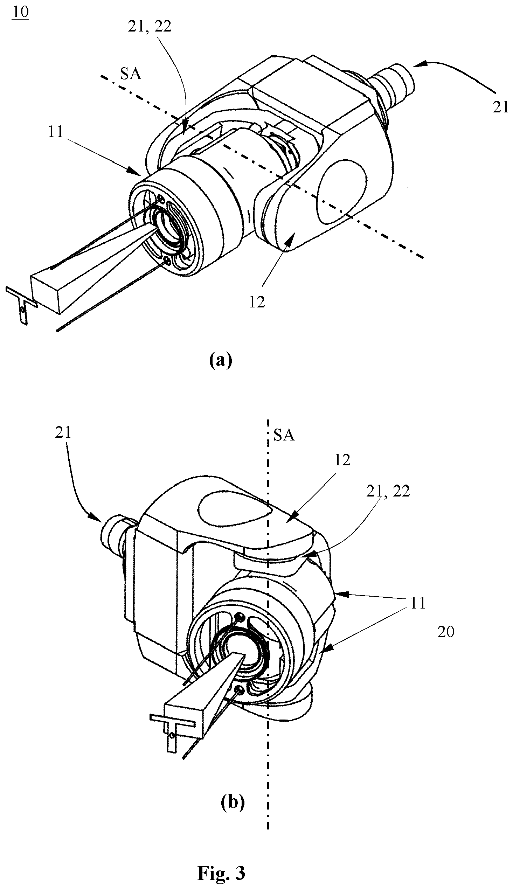

**Fig. 3** zeigt ein konkretes Anwendungsbeispiel der Erfindung anhand eines drehbaren und/oder schwenkbaren Kameramoduls eines Kanalinspektions- und/oder Wartungssystems 10.

Das Kameramodul weist hier einen Kamerakopf und eine Aufnahmegabel, zu Aufnahme des Kamerakopfes auf. Der Kamerakopf bildet hierbei die erste Komponente 11 im Sinne der Erfindung. Die Aufnahmegabel bildet hierbei die zweite Komponente 12 im Sinne der Erfindung.

Der Kamerakopf 11 ist um eine Schwenkachse SA relativ zur Aufnahmegabel 12 schwenkbar in der Aufnahmegabel 12 angeordnet. Damit kann die Blickrichtung des Kamerakopfes bei Bedarf verändert werden. Abbildung (a) zeigt den Kamerakopf 11 in einer ersten Schwenkposition, Abbildung (b) zeigt den Kamerakopf 11 in einer zweiten Schwenkposition.

Der Kamerakopf 11 weist ein erfindungsgemäßes erstes Koppelelement 21 auf, und die Aufnahmegabel 12 weist ein erfindungsgemäßes zweites Koppelelement 22 auf. Die Koppelemente 21, 22 sind im Bereich der Schwenkachse SA angeordnet, sodass die beiden Koppelemente 21, 22 relativ zueinander um die Schwenkachse SA drehbar sind. Die beiden Sende- und/oder Empfangsoptiken 31a, 32a der Koppelelemente 21, 22 sind jeweils in der Schwenkachse SA der Koppelelemente 21, 22 angeordnet, sodass ein Schwenken des Kamerakopfes 11 relativ zur Aufnahmegabel 12 keinen Einfluss auf die optische Datenübertragung hat.

Das rückseitige Ende der Aufnahmegabel 12 kann drehbar, beispielsweise an einen Hebearm eines Fahrwagens angeschlossen werden. Es hat sich als vorteilhaft erwiesen auch dort ein erstes Koppelelement 21 vorzusehen, dass mit einem zweiten Koppelelement des Hebearms zusammenwirkt. Damit kann eine durchgängige optische Datenübertragung vom Kamerakopf 11, über die Aufnahmegabel 12, weiter über den Hebearm bis hin zum Fahrwagen realisiert werden, ohne dass hierfür Schleifkontakte oder dergleichen benötigt werden. Da die jeweiligen Komponenten auch über eine eigene Energieversorgung (Akkumulatoren oder Batterien) verfügen können, können sämtliche Koppelstellen (zwischen Kamerakopf 11 und Aufnahmegabel 12, zwischen Aufnahmegabel 12 und Hebearm, und gegebenenfalls auch zwischen Hebearm und Fahrwagen) auch vollständig drahtlos ausgeführt werden. Verfügt eine der Komponenten nicht über eine eigene Energieversorgung, sind lediglich hierfür entsprechende Versorgungsleitungen nötig (wie etwa in Fig. 4 gezeigt). In einer vorteilhaften Ausgestaltung der Erfindung kann aber auch die Energieversorgung von außen kabel- bzw. drahtlos abgewickelt werden (d.h. drahtlos zwischen zwei Komponenten), wie in Fig. 5 gezeigt.

**Fig. 4** zeigt eine alternative Ausgestaltung zweier erfindungsgemäßer Komponenten eines Kanalinspektions- und/oder Wartungssystems.

Die Ausgestaltung gemäß Fig. 4 entspricht im Wesentlichen der in Fig. 1 gezeigten Ausgestaltung der Erfindung. Im Unterschied zu der in Fig. 1 gezeigten Ausgestaltung weisen die Koppelelemente 21, 22 hier zusätzlich eine erste elektrische Schnittstelle 41 und eine zweiten elektrische Schnittstelle 42 auf. Die beiden elektrischen Schnittstellen 41, 42 sind hier als Hülse 41 bzw. als zur Hülse 41 korrespondierender Stift 42 ausgestaltet. Beim Koppeln der beiden Koppelelemente 21, 22 gelangt der Stift 42 in Eingriff mit der Hülse 41, sodass zwischen ihnen ein elektrischer Kontakt entsteht und eine Übertragung von elektrischer Energie abgewickelt werden kann. Alternativ oder zusätzlich kann über die elektrischen Schnittstellen 41, 42 auch eine Datenübertragung abgewickelt werden.

Denkbar ist auch, dass weitere elektrische Schnittstellenpaare vorgesehen sind, sodass über das erste Schnittstellpaar die Energieversorgung und über die weiteren Schnittstellenpaare eine Datenübertragung abgewickelt werden kann. So kann beispielsweise ein System zur Datenübertragung zwischen einer ersten Komponente 11 und einer zweiten Komponente 12 eines Kanalinspektions- und/oder Wartungssystems bereitgestellt werden, bei dem eine Datenübertragung, die eine hohe Bandbreite benötigt, über die optische Schnittstelle und eine Datenübertragung, die nur eine niedrige Bandbreite benötigt, über eine elektrische Schnittstelle abgewickelt werden.

Neben der bidirektionalen optischen Datenübertragung über die beiden Transceiver-Einrichtungen 31, 32 kann auch die Datenübertragung über die elektrische Schnittstelle bidirektional ausgestaltet sein.

**Fig. 5** zeigt eine weitere alternative Ausgestaltung zweier erfindungsgemäßer Komponenten eines Kanalinspektions- und/oder Wartungssystems.

Die Ausgestaltung gemäß Fig. 5 entspricht im Wesentlichen der in Fig. 4 gezeigten Ausgestaltung der Erfindung. Im Unterschied zur Ausgestaltung gemäß Fig. 4 sind bei der Ausgestaltung gemäß Fig. 5 die beiden elektrischen Schnittstellen 41, 42 kontaktlos bzw. drahtlos ausgestaltet. Die beiden elektrischen Schnittstellen 41, 42 sind vorzugsweise angepasst die Übertragung 45 von elektrischer Energie auf induktiver Basis abzuwickeln.

Bei den vorstehen gezeigten Ausgestaltungen der Erfindung können die Transceiver-Einrichtungen 31, 32 jeweils angepasst sein empfangene optische Lichtimpulse, die empfangene Daten repräsentieren, in ein die empfangenen Daten repräsentierendes elektrisches Signal, und/oder ein elektrisches Signal, das zu sendende Daten repräsentiert, in zu sendende optische Lichtimpulse, die die zu sendenden Daten repräsentieren, umzuwandeln.

Vorstehend wurde ein Kamerakopf als erste Komponente im Sinne der Erfindung beschrieben. Als erste Komponente kann aber auch ein Messmodul, ein Ultraschallmodul, ein Manipulatormodul, ein zweiter Fahrwagenteil, eine Zusatzkamera, ein Fräsmodul oder ein Sensormodul vorgesehen sein. Im Sinne der vorliegenden Erfindung kann jedes Modul, das in der Kanalinspektion- und/oder Wartung verwendet wird und zu dem Daten übertragen werden bzw. von dem Daten empfangen werden, über ein erfindungsgemäßes Koppelelement 21, 22 verfügen, um eine erfindungsgemäße Komponente 11, 12 zu bilden.

### Bezugszeichen:

- 1: System zur Datenübertragung
- 10: Kanalinspektions- und/oder Wartungssystem
- 11: erste Komponente des Kanalinspektions- und/oder Wartungssystems 10
- 12: zweite Komponente des Kanalinspektions- und/oder Wartungssystems 10
- 21: erstes Koppelelement der ersten Komponente 11
- 22: zweite Koppelelement der zweiten Komponente 12
- 31: erste Transceiver-Einrichtung des ersten Koppelelements 21
- 31a: Sende- und/oder Empfangsoptik der ersten Transceiver-Einrichtung 31
- 32: zweite Transceiver-Einrichtung des zweiten Koppelelements 22
- 32a: Sende- und/oder Empfangsoptik der zweiten Transceiver-Einrichtung 32
- 35: optische Datenübertragung zwischen den beiden Transceiver-Einrichtungen 31, 32
- 41: erste elektrische Schnittstelle des ersten Koppelelements 21
- 42: zweite elektrische Schnittstelle des zweiten Koppelelements 22
- 45: elektrische Energieübertragung zwischen den beiden elektrischen Schnittstellen 41, 42
- SA: Schwenkachse
- X: Drehachse der beiden Koppelelemente 21, 22

## Patentansprüche

1. System (1) zur Datenübertragung zwischen einer ersten Komponente (11) und einer zweiten Komponente (12) eines Kanalinspektions- und/oder Wartungssystems (10), wobei
- die erste Komponente (11)
- ein erstes Koppelelement (21) und
- eine erste Transceiver-Einrichtung (31)
aufweist, wobei das erste Koppelelement (21) die erste Transceiver-Einrichtung (31) umfasst,
- die zweite Komponente (12)
- ein zweites Koppelelement (22) und
- eine zweite Transceiver-Einrichtung (32)
aufweist, wobei das zweite Koppelelement (22) die zweite Transceiver-Einrichtung (32) umfasst,
wobei die beiden Koppelelemente (21, 22) miteinander verbindbar sind, derart, dass bei miteinander verbundenen Koppelelementen (21, 22) die von den beiden Koppelelementen (21, 22) umfassten Transceiver-Einrichtungen (31, 32) operativ koppelbar sind, und
wobei die beiden Transceiver-Einrichtungen (31, 32) jeweils angepasst sind zwischen ihnen eine optische Datenübertragung (35) abzuwickeln.

2. System nach Anspruch 1, wobei die beiden Transceiver-Einrichtungen (31, 32) jeweils angepasst sind zwischen ihnen eine bidirektionale optische Datenübertragung (35) abzuwickeln.

3. System nach Anspruch 1, wobei
- das erste Koppelelement (21) eine erste elektrische Schnittstelle (41) und
- das zweite Koppelelement (22) eine zweite elektrische Schnittstelle (42) umfassen, die angepasst sind, bei miteinander verbundenen Koppelelementen (21, 22) eine Übertragung (45) von elektrischer Energie und/oder Daten zwischen den beiden Komponenten (11, 12) abzuwickeln.

4. System nach dem vorhergehenden Anspruch, wobei die beiden elektrischen Schnittstellen (41, 42) angepasst sind die Übertragung (45) von elektrischer Energie auf induktiver Basis abzuwickeln.

5. System nach Anspruch 1, wobei die beiden Koppelelemente (21, 22) relativ zueinander um eine gemeinsame Drehachse (X) drehbar miteinander verbindbar sind.

6. System nach dem vorhergehenden Anspruch, wobei die Transceiver-Einrichtungen (31, 32) jeweils eine Sende- und/oder Empfangsoptik (31a, 32a) aufweisen, die in der Drehachse (X) des jeweiligen Koppelelements (21, 22) angeordnet sind.

7. System nach Anspruch 1, wobei die beiden Koppelelemente (21, 22) derart ausgestaltet sind, dass sie im verbundenen Zustand für die Übertragungsstrecke der optischen Datenübertragung (35) zwischen den beiden Transceiver-Einrichtungen (31, 32) ein weitgehend gas- und fluiddichtes Volumen zwischen den beiden Koppelelementen (21, 22) bilden.

8. System nach Anspruch 1, wobei die Komponenten (11, 12) jeweils gas- und fluiddicht ausgeführt sind, insbesondere jeweils in einem gas- und fluiddichten Gehäuse angeordnet sind.

9. System nach Anspruch 1, wobei die beiden Transceiver-Einrichtungen (31, 32) jeweils angepasst sind
- empfangene optische Lichtimpulse, die empfangene Daten repräsentieren, in ein die empfangenen Daten repräsentierendes elektrisches Signal, und/oder
- ein elektrisches Signal, das zu sendende Daten repräsentiert, in zu sendende optische Lichtimpulse, die die zu sendenden Daten repräsentieren,
umzuwandeln.

10. System nach Anspruch 1, wobei die beiden Koppelelemente (21, 22) lösbar miteinander verbindbar sind.

11. Koppelelement (21, 22) für eine Komponente (11, 12) eines Kanalinspektions- und/oder Wartungssystems (10), wobei das Koppelelement eine Transceiver-Einrichtung (31, 32) umfasst, wobei das Koppelelement (21, 22) mit einem weiteren, eine Transceiver-Einrichtung (32, 31) aufweisenden Koppelelement (22, 21) koppelbar ist, wobei die Transceiver-Einrichtung (31, 32) angepasst ist eine optische Datenübertragung (35) zur Transceiver-Einrichtung (32, 31) des weiteren Koppelelements (22, 21) einzurichten.

12. Koppelelement nach dem vorhergehenden Anspruch, wobei das Koppelelement (21, 22) eine elektrische Schnittstelle (41, 42) umfasst, die angepasst ist mit einer elektrischen Schnittstelle (42, 41) des weiteren Koppelelements (22, 21) eine Übertragung von elektrischer Energie und/oder Daten abzuwickeln.

13. Koppelelement nach Anspruch 11, wobei die Transceiver-Einrichtung (31, 32) eine Sende- und/oder Empfangsoptik (31a, 32a) aufweist, wobei die Sende- und/oder Empfangsoptik (31a, 32a) vorzugsweise in einer Drehachse (X) des Koppelelements (21, 22) angeordnet ist.

14. Komponente (11, 12) eines Kanalinspektions- und/oder Wartungssystems (10), aufweisend ein Koppelelement (21, 22) und eine Transceiver-Einrichtung (31, 32), wobei das Koppelelement (21, 22) die Transceiver-Einrichtung (31, 32) umfasst, und wobei die Transceiver-Einrichtung (31, 32) angepasst ist eine optische Datenübertragung (35) abzuwickeln.

15. Komponente nach dem vorhergehenden Anspruch, wobei das Koppelelement (21, 22) eine elektrische Schnittstelle (41, 42) umfasst, wobei die elektrische Schnittstelle (41, 42) angepasst ist elektrische Energie und/oder Daten zu übertragen.

16. Komponente nach dem vorhergehenden Anspruch, wobei die elektrische Schnittstelle (41, 42) angepasst ist die elektrische Energie auf induktiver Basis zu übertragen.

17. Komponente nach Anspruch 14, wobei die Transceiver-Einrichtung (31, 32) eine optische Schnittstelle (31a, 32a) umfasst, die angepasst ist Daten zu übertragen.
